Europäisches Patentamt

European Patent Office

Office européen des brevets

(11) Publication number: **0 161 567**
**B1**

## EUROPEAN PATENT SPECIFICATION

(45) Date of publication of patent specification: **10.02.88**

(51) Int. Cl.⁴: **B 60 Q 1/14**

(21) Application number: **85105160.7**

(22) Date of filing: **26.04.85**

(54) Mulitple-setting control for vehicle indicating and/or operating device.

(30) Priority: **02.05.84 IT 6744184**

(43) Date of publication of application:
**21.11.85 Bulletin 85/47**

(45) Publication of the grant of the patent:
**10.02.88 Bulletin 88/06**

(84) Designated Contracting States:
**DE FR GB SE**

(56) References cited:
**DE-A-2 810 790**
**DE-A-3 036 061**
**FR-A-2 303 686**
**GB-A-1 182 213**

(73) Proprietor: **FIAT AUTO S.p.A.**
**Corso Giovanni Agnelli 200**
**I-10135 Torino (IT)**

(72) Inventor: **Recluta, Franco**
**Via Osasco, 30**
**I-10100 Torino (IT)**
Inventor: **Contato, Ugo**
**Corso Siracusa, 128**
**I-10100 Torino (IT)**

(74) Representative: **Prato, Roberto et al**
**c/o Ingg. Carlo e Mario Torta Via Viotti 9**
**I-10121 Torino (IT)**

Courier Press, Leamington Spa, England.

## Description

The present invention relates to a multiple-setting control for vehicle indicating and/or operating devices, such as the lights and direction indicators or the windscreen and rear window wipers.

Most of the indicating and/or operating devices on vehicles are currently known to be controlled by two or three control levers projecting radially from opposite sides of the steering column. Angular displacement of the said levers in relation to the steering column to which they are hinged activates respective switches located inside the steering column and designed to control the said indicating and/or operating devices according to the angular position of the respective control lever. Known controls with multiple-setting levers therefore involve serious assembly and maintenance problems, in that the control, including all the electric components on it, must perforce be assembled on-line straight on to the vehicle, thus resulting in numerous well-known drawbacks in terms of assembly efficiency, fitting work and assembly time. Furthermore, should servicing be required, access to both the electric and mechanical components on such controls entails dismantling the steering wheel and part of the steering column, as well as the undamaged part of the control for obtaining access to the parts requiring maintenance.

In order to overcome the aforementioned drawbacks, GB—A—1 182 213 teaches to pre-assemble separately the switches into a plurality of cases, each of which is provided with a cantilevered rotating command lever and is assembled separately on a fixed support unit assembled on the steering column coaxial therewith. Each of said levers may be moved along two different directions perpendicular to each other as taught by DE—A—2810790 in order to operate more than one switch per each case.

Such teachings however do not solve the problem to provide a simple, low cost, reliable and easy assembly control device; in fact both for devices of GB—A—1 182 213 and DE—A—2810790 it is necessary to assemble separately on the vehicle the cases and, moreover, the assembly of the switches inside each case is not easy, though the aforementioned prior patents do not describe the mechanism and the number of switches housed inside each case it is obvious that they have to be of known type and therefore surely inside each case it cannot be housed more than two switches and only with great difficulties and with very complex mechanism the assembly of which is accordingly so complex that the main part of the advantages that may be gained from the modular construction of the whole control owing to the cases is surely losen owing to the difficulties in assembly each case.

The aim of the present invention is to provide a multiple-setting lever control designed to fit on to a vehicle steering column having a structure enabling fast assembly and maintenance and troublefree assembly and removal of both its mechanical and electrical components.

A further aim of the present invention is to provide a control of the aforementioned type on which both the electric and mechanical components may be pre-assembled separately and independently to each other off the assembly line, in easy manner.

With respect to GB—A—1182213 which already discloses a multiple-setting control for vehicle indicating and/or operating devices, of the type comprising at least one control lever projecting radially in relation to the steering column on the vehicle, a connecting member supporting the said lever and in relation to which the said lever may be set selectively in a number of different angular positions, and switch means operated by the said lever for controlling the said indicating and/or operating devices; said connecting member comprising a supporting body, designed to fit integral with the said steering column and at least one control box housed in removable manner inside a respective seat on the said supporting body and containing the said switch means, means for securing the said control lever and means enabling connection to the electric circuit on the vehicle, the present invention is characterized in that said control box comprises a first half casing housing said switching means and all the electric circuit on the control, and a second half casing housing one end of said lever together with said securing means and all the mechanical components on the said control; said securing means comprising at least one respective first hinge pin arranged essentially perpendicular to and integral with the bottom wall on the said second half casing; a cup-shaped body hinged on the said first pin so as to turn round the same inside the said case and housing, in mobile manner, the said end of the said control lever; and a second hinge pin arranged perpendicular to the first and fitted on to the said cup-shaped body so as to hinge on to the latter the said end of the said control lever.

A non-limiting arrangement of the present invention will now be described with reference to the attached drawings in which:

— Fig. 1 shows a longitudinal section of a control according to the present invention;

— Fig. 2 shows a plan view of two details on the Fig. 1 control in the assembly position;

— Figs. 3 and 4 show respective sections along lines III—III and IV—IV of the Fig. 1 control;

— Fig. 5 shows a section along line V—V in Fig. 4;

— Figs. 6 and 7 show a plan view and elevation respectively of a detail on the Fig. 1 control.

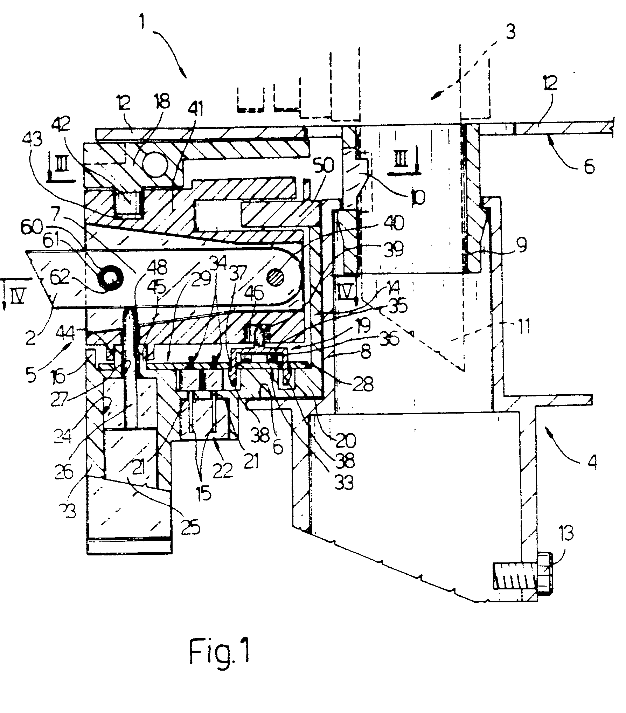

Number 1 in Fig. 1 indicates a multiple-setting control for indicating and/or operating devices on a vehicle (not shown), such as known types of direction indicators, parking lights, windscreen/rear window washers and wipers or similar (not shown). Control 1 comprises a control lever 2, projecting radially in relation to steering column 3 on the said vehicle, and a connecting member supporting lever 2 and in relation to which the said lever 2 may be set selectively in a number of different angular positions. The said connecting member is designed to fit on to the said steering column 3 and comprises a supporting body 4, designed to fit integral with the vehicle on the said steering column 3, and at least one control box 5 housed in removable manner inside a seat 6 on supporting body 4, connected integral with lever 2 and housing means for securing a respective end 7 on the said lever 2, and respective switch means operated by lever 2 for controlling the said indicating and/or operating devices on the said vehicle (not shown). In more detail, supporting body 4 comprises a tubular member 8, designed to fit coaxial and integral with steering column 3; a bushing 9, mounted in idle manner inside tubular member 8 and designed to engage, in angularly integral manner by means of tooth 10, rotary steering column 11 on steering column 3; and a pair of cup-shaped members 12, located on opposite sides of tubular member 8, formed integral with and projecting radially from the same and each defining internally a seat 6 for housing a respective control box 5. For simplifying matters, in the non-limiting example shown, only one of the said cup-shaped members 12 is shown with its respective box 5 fitted inside seat 6, whereas the opposite member 12 is shown without box 5 inside respective seat 6. Supporting body 4 is preferably formed entirely from synthetic plastic resin and provided with fastening means, e.g. one or more screws 13, for securing it to steering column 3.

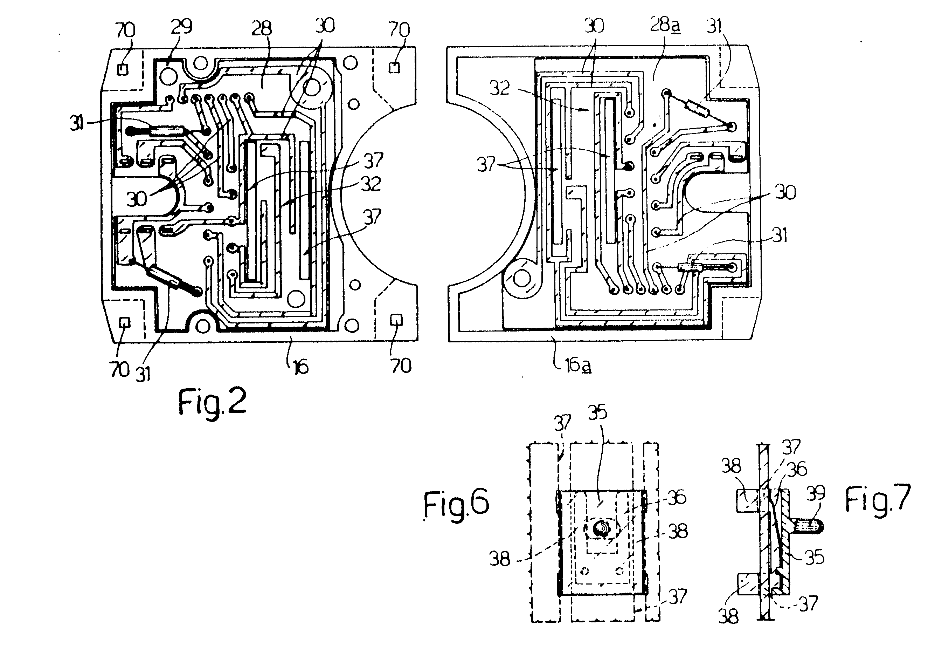

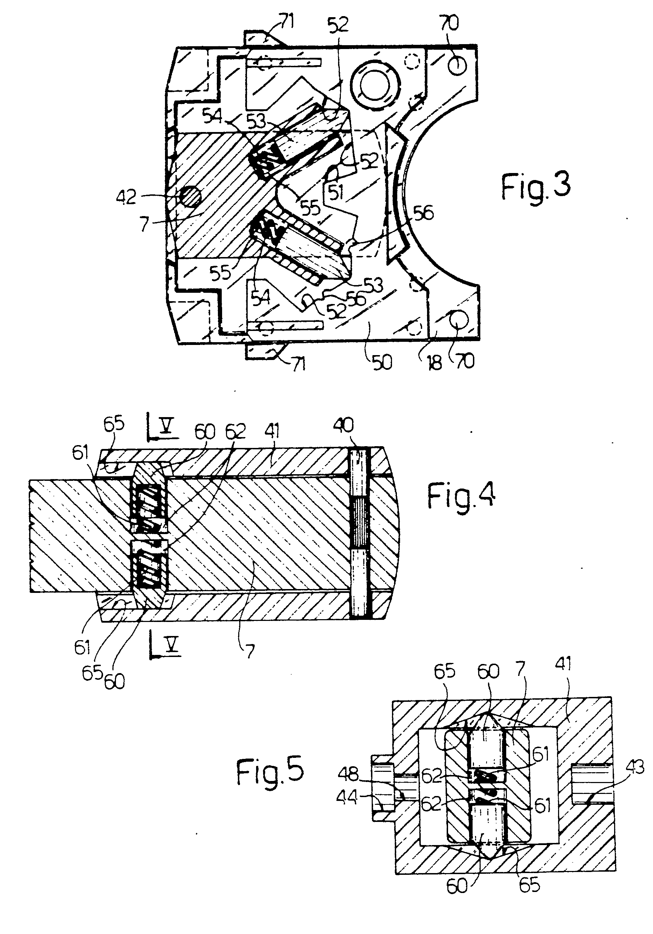

As shown also in Figs 2 and 3, each control box 5 comprises a hollow, essentially-parallelepiped, self-supporting case 14 housing end 7 of lever 2, the means for securing the said lever 2 to box 5, and a number of electrical connectors 15, the latter being fitted partly outside case 14 and being designed to enable fast electrical connection of the said switch means, housed inside box 5, to a known type of electrical circuit (not shown) on the said vehicle (not shown). According to the present invention, the said case 14 is defined by a pair of essentially cup-shaped half casings 16 (Fig. 2) and 18 (Fig. 3) designed to fit together with their inner concave sides facing, so as to define, inside case 14, a chamber 19 for housing the said switch means and the said means for securing the said end 7 of lever 2. According to the non-limiting example described and illustrated herein, the said lever 2 is designed to turn, in relation to steering column 3, in two essentially-perpendicular planes, in such a manner as to be turned by the operator of control 1 in a plane essentially parallel with that of the steering wheel (not shown) on the vehicle, as well as round an axis parallel with the said plane and such as to enable lever 2 to be drawn towards (or pushed away) from the operator. In Fig. 2, half casing 16 is shown beside half casing 16a, which forms part of a control box similar to box 5 (not shown) and designed to fit inside the free seat 6 on supporting body 4 so as to position half casing 16a in relation to half casing 16 on box 5 as shown in the plan view in Fig. 2. The said half casing 16 comprises an essentially-flat bottom wall 20 and is designed to house all the electric circuits on control 1. Half casing 18, on the other hand, houses end 7 on lever 2, together with the said securing means and, generally speaking, all the mechanical devices on control 1. In more detail, bottom wall 20 on half casing 16 is provided with respective through holes 21 for enabling the said connectors 15 to come out of box 5 through wall 20; with an external seat 22 for housing connectors 15 and designed to receive a respective connecting plug of any known type for connecting the said connectors 15 to the said electric circuit (not shown) on the vehicle (not shown) on to which control 1 may be fitted; and with an essentially-parallelepiped, box-shaped projection 23 arranged with its axis essentially parallel to that of tubular member 8 and connectors 15 and having an internal cavity 24 housing, according to a preferred arrangement of the present invention, any known type of switch box 25 having a control rod 26 housed in sliding manner inside a further hole 27, formed through bottom wall 20, and of such a length as to penetrate deep inside chamber 19 so as to cooperate with end 7 of lever 2 and so be displaced by rotation of the latter.

A box 5 in chamber 19 houses, against bottom wall 20, an essentially-flat printed circuit 28 supported on half casing 16 and shown clearly in the plan view in Fig. 2. On its upper face 29, facing away from wall 20, the said printed circuit 28 is provided with a number of conducting tracks 30 defining a complete control circuit, which may be further extended by welding printed circuit 28 with electrical components 31, such as resistors, timers, condensers or similar, and fixed contact 32 which is thus supported by printed circuit 28 itself. The latter also has a lower face 33 facing and resting on .bottom wall 20 and fitted in projecting manner with connectors 15 which, according to the present invention, are supported integral with printed circuit 28, by means of respective fastening holes 34 formed through the said printed circuit 28, and which are connected electrically, through holes 34, to conducting tracks 30. A printed circuit 28 is also fitted on face 29 with a sliding pad 35, shown in enlarged scale in Figs. 6 and 7, made of non-conducting material and having, towards face 29, a multiple-blade contact 36 designed to cooperate in sliding manner with fixed contact 32 for opening or closing the electric circuits defined by conducting tracks 30 subsequent to displacement of lever 2. A pad 35 is secured to printed circuit 28 in such a manner as to be pre-assembled on to the said circuit 28, prior to insertion of the latter inside half casing 16 together with connectors 15 and electric components 31, by means of a pair of through guide slots 37 into which are locked respective flexible pins 38 on pad 35 itself, formed through printed circuit 28. Pad 35 is provided with a shift pin 39 designed to engage, as explained later on, with the means securing lever 2, in such a manner as to slide pad 35 along slots 37 subsequent to rotation of lever 2 in a plane parallel to that of printed circuit 28.

End 7 on lever 2 is hinged by means of pin 40 to a cup-shaped body 41 housed in mobile manner inside chamber 19 and itself housing end 7. Cup-shaped body 41 is hinged to half casing 18 by means of hinge pin 42, the latter being coaxial with hole 27 and essentially perpendicular to bottom wall 20 and to the corresponding opposite bottom wall on half casing 18, with which it is integral.

The said pin 42 is engaged in idle manner by hole 43 formed on the outside of cup-shaped body 41 which is also provided with a recess 46 and a connecting seat 44 for a further hinge pin 45 formed coaxially with pin 42 inside half casing 16 and integral with bottom wall 20. When half casings 16 and 18 are mated, recess 46 and seat 44 are connected respectively to pin 45 and shift pin 39, so as to enable body 41 to turn inside case 14, following operation of lever 2 by the user, and so slide pad 35 and, consequently, operate the switch means consisting of pad 35 itself on printed circuit 28. Pin 40 is arranged with its axis parallel to printed circuit 28 so as to enable lever 2 to turn simultaneously round pins 42 and 45 in a plane parallel to that of printed circuit 28, and round pin 40 in a plane perpendicular to the said printed circuit 28, in such a manner as to shift rod 26 and so activate known switch box 25. In which case, contact 32 and box 25 may be used for controlling the washer and wiper on the windscreen and rear window respectively. Body 41 is also provided with a corresponding hole 48 formed coaxially with seat 44 and designed to enable the passage of rod 26 towards end 7 on lever 2.

The half casing 18 is also fitted inside with a device for contrasting and setting operation of lever 2, the said device comprising a plate 50, locked between mated half casings 16 and 18 and having a shaped edge 51 defined by respective inclined surfaces 52, and a pair of push rods 53 designed to move, against the action exerted by flexible means 54, inside respective seats 55 formed radially on the outer side of cup-shaped body 41; the said push rods 53 being designed to cooperate with edge 51 so as to impede rotation of body 41 round pin 42 and selectively position the said body 41 in stable manner in a number of different angular positions, via insertion of one of the said push rods 53 inside respective recesses 56 formed on the said shaped edge 51 on a first pair of inclined surfaces 52 with which the said push rod 53 cooperates. A second pair of inclined surfaces 52 cooperates with the other push rod 53 for simply contrasting, in flexible manner, rotation of body 41. Rotation of end 7 on pin 40, in relation to body 41, is contrasted by a further pair of push rods 60 located on end 7 itself and housed, in mobile manner against the action of respective springs 61, inside a pair of opposite coaxial holes 62 formed in end 7 parallel with pin 40, the said push rods 60 cooperating with a respective pair of facing V-shaped cavities 65 defining respective opposite inclined surfaces for contrasting the said rotation of lever 2 on pin 40 by pushing rods 60 inside holes 62 against the action exerted by springs 61. Half casings 16 and 18 are also provided with through holes 70 for accommodating respective known types of assembly screws (not shown) for securing the said half casings 16 and 18 together so as to form case 14.

As the control box fitted inside the free seat 6 on supporting body 4 is identical to the aforementioned box 5, only a detail on the said box, consisting of bottom half casing 16a (Fig. 2) is illustrated herein. The said half casing 16a is essentially identical to half casing 16, the only difference being that it contains a printed circuit 28a having tracks 30 of a different shape and number. Any details similar or identical to those already described are shown using the same numbers. The said control box of which half casing 16a forms part may obviously be employed, for example, for controlling the direction indicators on the vehicle.

Operation and assembly of control 1 according to the present invention will be clear from the foregoing description. The special design of the structure on control 1 provides for troublefree, on-line assembly of supporting body 4 on to the vehicle, and for separate off-line assembly, in appropriate assembly bays, of all the mechanical and electrical components in box 5 inside respective half casings 16 and 18. In more detail, all the electric components, connectors 15 and pad 35 are fitted on to printed circuit 28 which, together with switch box 25, also pre-assembled in a separate assembly bay, is then inserted inside half casing 16. At the same time, lever 2 is fitted on to cup-shaped body 41 which is then fitted on to half casing 18 together with plate 50 and after first inserting, inside the said half casing 18, push rods 53 and respective springs 55 and, on to end 7, push rods 60 and respective springs 61. The two preassembled half casings are then put together and secured by through screws to form box 5 which is thus fully operative and may, if necessary, be tested off the line by connecting connectors 15 to an appropriate test circuit by inserting a plug inside receptacle 22. Box 5 so formed and tested is then sent on to the assembly line where it may simply be slid inside respective seat 6 and locked, for example, by means of flexible tabs 71 (Fig. 3) formed on either of half casings 16 and 18, and/or by means of screws (not shown) fitted externally on to cup-shaped members 12. Finally, after being secured inside seats 6, the said boxes 5 are connected to the electric circuit on the vehicle by inserting inside seats 22 connecting devices designed to cooperate with connectors 15. Lever 2 may thus be operated so as to turn round pin 40 and so displace rod 26 and, consequently, switch box 25. Alternatively, cup-shaped body 41, with which lever 2 is fitted integral, may be turned as to displace pad 35 via pin 39 which, when the two half casings 16 and 18 are assembled, engages a corresponding recess 46 on body 41 so as to switch fixed contact 32. By appropriately designing and selecting an appropriate number of conducting tracks 30 on printed circuits 28, box 5 may obviously be employed for controlling any one or more of the indicating and/or operating devices on the vehicle.

The advantages afforded by the control according to the present invention, as compared with known types of controls, will be clear from the foregoing description. In particular, it provides for extensive use of pre-assembly bays, possibly employing robot facilities, as well as for fast assembly and removal on and off the vehicle of the most complex part of the control, i.e. boxes 5. The possibility of removing defective parts rapidly off the vehicle, without affecting the other parts on the control, obviously affords enormous advantages in terms of maintenance.

## Claims

1. Multiple-setting control (1) for vehicle indicating and/or operating devices, of the type comprising at least one control lever (2) projecting radially in relation to the steering column (3) on the vehicle, a connecting member (4,5) supporting the said lever (2) and in relation to which the said lever (2) may be set selectively in a number of different angular positions, and switch means (28,35) operated by the said lever (2) for controlling the said indicating and/or operating devices; said connecting member comprising a supporting body (4), designed to fit integral with the said steering column (3), and at least one control box (5) housed in removable manner inside a respective seat (6) on the said supporting body (4) and containing the said switch means (28,35), means (40,41) for securing the said control lever (2) and means (15) enabling connection to the electric circuit on the vehicle, characterized in that said control box (5) comprises a first half casing (16) housing said switching means (28,35) and all the electric circuit on the control (1), and a second half casing (18) housing one end (7) of said lever (2) together with said securing means (40,41) and all the mechanical components on the said control (1); said securing means comprising at least one respective first hinge pin (42) arranged essentially perpendicular to and integral with the bottom wall on the said second half casing (18); a cup-shaped body (41) hinged on the said first pin (42) so as to turn round the same inside the said case (14) and housing, in mobile manner, the said end (7) of the said control lever (2); and a second hinge pin (40) arranged perpendicular to the first (42) and fitted on to the said cup-shaped body (41) so as to hinge on to the latter the said end (7) of the said control lever (2).

2. Control (1) according to Claim 1, characterised by the fact that the said supporting body (4) comprises a tubular member (8), designed to fit coaxial and integral with the steering column (3) on the vehicle; a bushing (9) mounted in idle manner inside the said tubular member (8) and designed to engage, in angularly integral manner, the steering column (11) on the vehicle; and a pair of cup-shaped members (12) arranged on opposite sides of and projecting radially from the said tubular member (8) and each defining internally a said seat (6) for accommodating the said control box (5).

3. Control (1) according to Claim 1 or 2, characterised by the fact that the said control box (5) comprises an essentially-parallelepiped case (14) defined by said first and second half casings (16,18), which are essentially cup-shaped and designed to fit together with their concave sides facing so as to define, inside the said case, a chamber (19) for housing the said switching and securing means and said end (7) of the said lever (2); said first of the said half casings (16) having externally, on a bottom wall (20), respective electric connectors (15) for connection to the electric circuit on the vehicle.

4. Control (1) according to Claim 3, characterised by the fact that the said switching means comprise a flat printed circuit (28) housed inside the first half casing (16) against the said bottom wall (20) and having, on its upper face (29), a number of conducting tracks (30) and, on its lower face (33) facing the said bottom wall (20), the said electric connectors (15); and a pad (35) made of non-conducting material, fitted in sliding manner on the said upper face (29) of the said printed circuit (28) and having, towards the said upper face (29), a multiple-blade contact (36) designed to cooperate in sliding manner with a fixed contact (32) fitted on the said printed circuit (28) and defined by the said conducting tracks (30) on the same.

5. Control (1) according to Claim 4, characterised by the fact that the said printed circuit (28) is provided with a pair of through guide slots (37), inside which are locked respective flexible pins (38) on the said pad (35), and with respective assembly holes (34) for the said electric connectors (15), the latter being integral with the said printed circuit (28) and connected electrically, through the said holes (34), to the said conducting tracks (30).

6. Control (1) according to Claim 4 or 5, characterised by the fact that the said first half casing (16) is provided, on the said bottom wall (20), with respective through holes (27) for the said connectors (15) and, externally, with a seat (22) for housing the same.

7. Control (1) according to any of the preceding claims, characterised by the fact that the said cup-shaped body (41) is provided with a recess (46) connectable, when the said half casings (16,18) are mated, to a respective shift pin (39) integral with the said pad (35) for shifting the latter along the said slots (37) subsequent to rotation of the said cup-shaped body (41).

8. Control (1) according to Claim 7, characterised by the fact that the said cup-shaped body (41) is provided with a connecting seat (44) for a third hinge pin (45) formed coaxial with the said first pin (42) and integral with the said first half casing (16); and with a crosswise hole (48) coaxial with a corresponding hole in the said first half casing (27) for housing, in through manner, a sliding rod (26) designed to cooperate with and be displaced by the said control lever (2), following rotation of the latter on the said second pin (40), and controlling a switch box (25) housed inside a corresponding cavity (24) formed inside an external projection (23) on the said half casing (16).

9. Control (1) according to claim 7 or 8, characterised by the fact that the said control box (5) is provided with a device for contrasting and setting operation of the said lever (2), the said device comprising a plate (50) having a shaped edge (51), the latter defined by respective inclined surfaces (52), and being locked between the said half casings (16,18); and a pair of first push rods (53) moving, against the action exerted by flexible means (54), inside respective seats (55) formed radially inside the said cup-shaped body (41); the said push rods (53) being designed to cooperate with the said shaped edge (51) for contrasting rotation of the said cup-shaped body (41) on the said first pin (42) and for selectively setting, in stable manner, the said cup-shaped body (41) in a number of different angular positions, via insertion of one of the said first push rods (53) inside respective recesses (56) on the said shaped edge (51).

10. Control (1) according to one of the foregoing Claims from 7 to 9, characterised by the fact that the said end (7) of the said lever (2) is provided with a device for contrasting rotation of the said lever (2) round the said second pin (40), the said device comprising a pair of facing V-shaped cavities (65), formed inside the said cup-shaped body (41), and a pair of second push rods (60) cooperating with the said facing cavities (65) and moving, against the action exerted by respective springs (61), inside a pair of opposite coaxial holes (62) formed inside the said end (7) of the said control lever (2), parallel with the axis of the said second pin (40).

**Patentansprüche**

1. Mehrzweckregelungsschaltung (10) für Anzeige- bzw. Funktionsvorrichtungen von Kraftfahrzeugen, vom Typ mit mindestens einem radial gegenüber der Lenksäule (3) am Fahrzeug hervorstehenden Schalthebel (2), einem Verbindungselement (4,5) welches den Schalthebel hält und zu dem der Hebel (2) in verschiedene Winkelposition en verstellbar ist, sowie ein von diesem Hebel gesteuertes Mittel (28, 35) um die Anzeige- und/oder Funktionsvorrichtungen umzuschalten, wofür das Verbindungselement einen Tragkörper (4) aufweist, der sich vollständig an die Lenksäule (3) anpasst und mindestens einen Steuerkasten (5) besitzt, der in einem entsprechenden Sitz (6) im Tragkörper (4) untergebracht ist und das Umschaltmittel (28,35) enthält, Mittel (40,41) zur Befestigung des Schalthebels (2), sowie Mittel (15), welche die Verbindung zum elektrischen Stromkreis des Fahrzeuges herstellen, dadurch gekennzeichnet dass der Steurkasten (5) eine erste Gehäusehälfte (16) aufweist, welche das Umschaltmittel (18,35) sowie den gesamten Schaltkreis (1) enthält und eine zweite Gehäusehälfte (18), in der ein Endez (7) des Hebels (2) zusammen mit dem Befestigungsmittel (40,41) und alle mechanischen Teile dieserSchaltung untergebracht sind, während die Befestigungsmittel mindestens einen ersten Scharnierstift (42) aufweisen, der senkrecht und einstückig mit der unteren Wand an dieser zweiten Gehäusehälfte (18) angebracht ist; ein wannenförmiger Körper (41), am ersten Stift (42) kippbar so befestigt, dass er sich um den Stift im Gehäuse (14) dreht und das Ende (7) des Hebels (2) beweglich untergebracht ist, sowie ein senkrecht zum ersten Stift (42) angebrachter zweiter kippbarer Stift (40), der an den wannenförmigen Körper (41) so angepasst ist, dass auf diesem das Ende (7) des Hebels (2) scharnierartig befestigt ist.

2. Schaltung nach Anspruch 1, dadurch gekennzeichnet dass der Tragkörper (4) ein rohrförmiges Element (8) zur koaxialen und ergänzenden Anpassung an die Lenksäule (3) am Fahrzeug umfasst; eine lose im rohrförmigen Element (8) montierte Buchse (9), um die Lenksäule (11) in Winkelstellung am Fahrzeug zu halten, sowie ein Paar an den gegenüberliegenden Seiten vorgesehene wannenförmige Elemente, welche radial von den rohrförmigen Elementen (8) vorstehen und wo jede innenseitig den Sitz (6) zur Aufnahme des Steuerkastens (5) begrenzt.

3. Schaltung (1) nach Anspruch 1 oder 2, dadurch gekennzeichnet, das der Steuerkasten (5) ein vonder ersten und zweiten gehäusehälfte (16,18) begrenzter im wesentlichen rechteckiger und wannenförmiger Kasten ist, dazu vorgesehen zusammen mit seinen konkaven Flächen innerhalb des Kastens eine Kammer (19) zu bilden um die Umschaltund Befestigungsmittel sowie das Ende (7) des Hebels (2) zu enthalten, wobei die erste Gehäusehälfte (16) aussen an einer unteren Wand (20) elektrische Anschlüsse (15) zur Verbindung an den Stromkreis des Fahrzeuges besitzt.

4. Schaltung nach Anspruch 3, dadurch gekennzeichnet dass das Umschaltmittel eine innerhalb der ersten Gehäusehälfte (16) an deren unteren Wand angebrachte flache gedruckte Schaltplatte (28) enthält, welche auf der Oberseite (29) mehrere Leitpfade (30) und auf der zur unteren Wand (20) zeigenden Unterseite (33) elektrische Anschlüsse (15), sowie einen aus nicht leitendem Material bestehenden Gleitschuh (35) aufweist, der verschiebbar an der Oberseite (29) der Druckschaltung (28) angebracht ist, mit zur Oberseite (29) hin einen Mehrblättrigen Kontakt (536) zum gleitenden Eingriff in den an der Druckschaltung (28) vorgesehenen festen Kontakt (32) und an dieser durch die Leitpfade (30) begrenzt.

5. Schaltung nach Anspruch 4, dadurch gekennzeichnet dass die Druckschaltung (28) ein Paar durchgehende Führungsschlitze (37) besitzt, in denen entsprechende biegsame Stifte (38) am Gleitschuh (35) sowie Montagebohrungen (34) für die elektrischen Anschlüsse vorgehesen sind, wobei letztere ergänzend in der Druckschaltung (28) vorliegen und durch die Bohrungen (34) elektrisch mit den Strompfaden (30) verbunden sind.

6. Schaltung nach Anspruch 4 oder 5, dadurch gekennzeichnet dass die erste Gehäusehälfte (16) an der Unterseite (20) entsprechende Durchgangsbohrungen (27) für die Anschlüsse (15) und aussen einen Sitz (22) für deren Aufnahme aufweist.

7. Schaltung nach einem der vorhergehenden Ansprüche, dadurch gekennzeichnet dass der wannenförmige Körper (41) eine Vertiefung (46) aufweist, die nach Paarung der beiden Gehäusehälften (16,18) an einen entsprechenden, mit dem Gleitschuh (35) einstückig an einen Verschiebungsstift (39) anschliessbar um den Gleitschuh längs des Schlitzes (37) bei Drehung des wannenförmigen Körpers (41) zu verschieben.

8. Schaltung nach Anspruch 7, dadurch gekennzeichnet dass der wannenförmige Körper (41) einen Verbindungssitz (44) füre einen dritten kippbaren Stift (45) aufweist, der koaxial an den ersten Stift (42) und einstückig an die erste Gehäusehälfte (16) angeformt ist sowie eine koaxial zu einer entsprechenden Bohrung in der Gehäusehälfte (16) kreuzförmige Bohrung (48), um dort durchgehend untergebracht zu werden, eine Stange (26) die vom Hebel (52) nach Drehung desselben in den zweiten Stift (40) verschoben wird und einen Umschaltkasten (25) steuert, der innerhalb einer entsprechenden in dem Aussenvorsprung (23) an der Gehäusehälfte (16) geformten Aussparung (24) liegt.

9. Schaltung nach Anspruch 7 oder 8, dadurch gekennzeichnet dass der Steuerkasten (5) eine Vorrichtung zur Hemmungs- und Betriebseinstellung des Hebels (2) aufweist, wobei die Vorrichtung eine Platte mit profiliertem Rande (51) hat, welcher durch entsprechende geneigte Flächen (52) begrenzt wird und zwischen den Gehäusehälften (16,18) eingeklemmt ist, sowie ein Paar von ersten beweglichen Schubstangen (53), gegen die von biegsamen Mittels (54) entgegengebrachte Kraft innerhalb entsprechenden, radial im Innern des wannenförmigen Körpers (41) geformten Sitze (55) wirkt, wo die Schubstangen (53) mit dem profiliertem Rande (51) um Hemmen der Drehung des wannenförmigen Körpers (41) auf dem ersten Stift (42) vorgesehen sind und um den wanneförmigen Körper (41) in verschiedene Winkelstellungen mittels Einführen einer der ersten Schubstangen (53) in die entsprechenden Vertiefungen (56) am profiliertn Rande (51) zu verstellen.

10. Schaltung nach einem der Ansprüche 7—9, dadurch gekennzeichnet dass das Ende (7) des Hebels (2) einen Vorrichtung zum Hemmen der Drehung des Hebels (2) um den zweiten Stift (40) aufweist, wo die Vorrichtung ein Paar V-förmige Vertiefungen (65), sowi ein Paar zweite Schubstangen (60) besitzt, welche mit der Vertiefung (65) gegen die Kraft der Feder (61) innerhalb einem Paar koaxial gegenüberliegenden Bohrungen (62) wirken, welche sich am Ende (7) des Hebels (2) parallel zur Achse des zweiten Stiftes (40) befinden.

## Revendications

1. Commande à plusieurs positions (1) pour des dispositifs indicateurs et/ou fonctionnels sur un véhicule, du type comprenant au moins un levier de commande (2) se projetant radialement de la colonne de direction (3) du véhicule, un élément de liaison (4,5) supportant ce levier (2) et par rapport auquel le levier (2) peut étre sélectivement positionné en un certain nombre de positions angulaires différentes, et des moyens d'interrupteurs (28,35) actionnés par le levier (2) pour commander les dispositifs indicateurs et ou fonctionnels, cet élément de liaison comportant un corps support (4) conçu pour être solidarisé de la colonne de direction (3) et au moins un boîtier de commande (5) logé de manière amovible à l'intérieur d'un logement respectif (6) sur ce corps support (4) et contenant les moyens d'interrupteurs (28,35), des moyens (40,41) pour fixer le levier de commande (2) et des moyens (15) permettant le raccordement au circuit électrique du véhicule, caractérisée en ce que le boîtier de commande (5) comporte un premier demi-boîtier (16) contenant les moyens d'interrupteurs (28,35) et tout le circuit électrique de la commande (1) et un deuxième demi-boîtier (18) contenant une extrémité (7) du levier (2) avec les moyens de fixation (40,41) et tous les composants mécaniques de la commande (1), les moyens de fixation comprenant au moins une première broche d'articulation (42) essentiellement perpendiculaire à la paroi de fond du deuxième demi-boîtier (18) et d'une seule pièce avec elle, un corps en forme de coupe (41) articulé sur cette première broche (42) de façon à pivoter autour d'elle à l'intérieur d'un logement (14) et contenant, de manière mobile, l'extrémité (7) du levier de commande (2) et une deuxième broche d'articulation (40) perpendiculaire à la première (42) et montée sur le corps en forme de coupe (41) de façon que l'extrémité (7) du levier de commande (2) soit articulée sur ce dernier.

2. Commande (1) selon la revendication 2, caractérisée en ce que le corps support (4) comporte un élément tubulaire (8) conçu pour se loger coaxialement sur la colonne de direction (3) du véhicule et en étre solidarisé; une douille (9) montée, folle, à l'intérieur de l'élément tubulaire (8) et conçue pour coopérer avec la colonne de direction (11) du véhicule, de manière à en être solidarisée en rotation; et deux éléments en forme de coupe (12) disposés de part et d'autre de l'élément tubulaire (8) et s'en projetant radialement, chacun définissant à l'intérieur un logement (6) pour recevoir le boîtier de commande (5).

3. Commande (1) selon la revendication 1 ou la revendication 2, caractérisée en ce que le boîtier de commande (5) comporte un logement essentiellement parallélépipédique (14) défini par le premier demi-boîtier (16) et le deuxième demi-boîtier (18), qui sont essentiellement en forme de coupe et conçus pour se raccorder ensemble avec leurs côtés concaves en vis-à-vis de façon à définir, à l'intérieur dudit logement, une chambre (19) pour contenir les moyens d'interrupteurs et de fixation et l'extrémité (7) du levier (2), le premier de ces demi-boîtiers (16) ayant à l'extérieur sur une paroi de fond (20) des connecteurs électriques respectifs (15) pour raccordement au circuit électrique du véhicule.

4. Commande (1) selon la revendication 3, caractérisée en ce que les moyens d'interrupteurs comportent un circuit imprimé plat (28) logé à l'intérieur du premier demi-boîtier (16) contre la paroi de fond (20) et ayant, sur sa face supérieure (29) un certain nombre de pistes conductrices (30) et, sur sa face inférieure (33) faisant face à la paroi de fond (20), les connecteurs électriques (15), et un patin (35) en un matériau non conducteur, monté de manière coulissante sur la face supérieure (29) du circuit imprimé (28) et ayant, orienté vers cette face supérieure (29), un contact à lames multiples (36) conçu pour coopérer de manière coulissante avec un contact fixe (32) monté sur le circuit imprimé (28) et défini par les pistes conductrices (30) de celui-ci.

5. Commande (1) selon la revendication 4, caractérisée en ce que le circuit imprimé (28) comporte deux fentes de guidage traversantes (37), à l'intérieur desquelles sont bloquées des broches flexibles respectives (38) du patin (35), et des trous de montage respectifs (34) pour les connecteurs électriques (15) ces derniers étant d'un seul tenant avec le circuit imprimé (28) et étant raccordés électriquement, à travers les trous (34) aux pistes conductrices (30).

6. Commande (1) selon la revendication 4 ou 5, caractérisée en ce que le premier demi-boîtier (16) comporte, sur la paroi de fond (20), des trous traversants respectifs (27) pour les connecteurs (15) et à l'extérieur un siège (22) pour loger ces connecteurs.

7. Commande (1) selon l'une quelconque des revendications précédentes, caractérisé en ce que le corps en forme de coupe (41) comporte un évidement (46) pouvant être raccordé, lorsque les demi-boîtiers (16,18) sont assemblés, à un téton de déplacement respectif (39) d'un seul tenant avec le patin (35) pour déplacer ce dernier le long des fentes (37) après le pivotement du corps en forme de coupe (41).

8. Commande (1) selon la revendication 7, caractérisée en ce que le corps en forme de coupe (41) comporte un siège de raccordement (44) pour une troisième broche d'articulation (45) coaxiale à la première broche (42) et d'un seul tenant avec le premier demi-boîtier (16); et un trou transversal (48) coaxial à un trou correspondant dans le premier demi-boîtier (27) pour contenir une tige (26) coulissant à travers ce trou et conçue pour coopérer avec le levier de commande (2) et être déplacée par celui-ci, après le pivotement de ce dernier sur la deuxième broche (40) et pour commander une boîte d'interrupteurs (25) logée à l'intérieur d'une cavité correspondante (24) formée à l'intérieur d'un prolongement extérieur (23) de ce demi-boîtier (16).

9. Commande (1) selon la revendication 7 ou 8, caractérisée en ce que le boîtier de commande (5) comporte un dispositif pour positionner le levier (2) et s'opposer à son actionnement, ce dispositif comportant une plaque (50) ayant un bord de forme (51) défini par des surfaces inclinées respectives (52), et bloquée entre les demi-boîtiers (16, 18), et deux premiers poussoirs (53) se déplaçant, contre l'action exercée par des moyens élastiques (54), à l'intérieur de sièges correspondants (55) formés radialement à l'intérieur du corps en forme de coupe (41), ces poussoirs (53) étant conçus pour coopérer avec le bord de forme (51) pour s'opposer au pivotement du corps en forme de coupe (41) autour de la première broche (42) et pour positionner sélectivement, de manière stable, le corps en forme de coupe (41) dans un certain nombre de positions angulaires différentes, grâce à l'introduction de l'un de ces premiers poussoirs (53) à l'intérieur d'évidements respectifs (56) du bord de forme (51).

10. Commande (1) selon l'une quelconque des revendications précédentes 7 à 9, caractérisée en ce que l'extrémité (7) du levier (2) est équipée d'un dispositif pour s'opposer au pivotement de ce levier (2) autour de la deuxième broche (40), ce dispositif comportant deux cavités en forme de V en vis-à-vis (65) formées à l'intérieur du corps en forme de coupe (41) et deux seconds poussoirs (60) coopérant avec ces cavités en vis-à-vis (65) et se déplaçant, contre l'action exercée par des ressorts respectifs (61), à l'intérieur de deux trous coaxiaux opposés (62) formés à l'intérieur de l'extrémite (7) du levier de commande (2), parallèlement à l'axe de la deuxième broche (40).

Fig.1

Fig.2

Fig.6

Fig.7

Fig.3

Fig.4

Fig.5